Europäisches Patentamt

(19) European Patent Office

Office européen des brevets

(11) Publication number: **0 238 317 B1**

# (12) EUROPEAN PATENT SPECIFICATION

(45) Date of publication of patent specification: **25.09.91**   (51) Int. Cl.⁵: **H02K 37/14**

(21) Application number: **87302306.3**

(22) Date of filing: **18.03.87**

(54) **An electric motor.**

(30) Priority: **19.03.86 JP 62723/86**

(43) Date of publication of application:
**23.09.87 Bulletin 87/39**

(45) Publication of the grant of the patent:
**25.09.91 Bulletin 91/39**

(84) Designated Contracting States:
**CH DE FR GB LI**

(56) References cited:
**DE-A- 2 105 107**
**DE-B- 1 538 791**

**IBM TECHNICAL DISCLOSURE BULLETIN, vol.
27, no. 6, November 1984, pages 3570,3571;
H.D. CHAI et al.: "Step motors with high
cogging torque"**

(73) Proprietor: **Aichi Tokei Denki Co., Ltd.
2-70, Chitose 1-chome Atsuta-ku
Nagoya-shi Aichi-Ken 456-91(JP)**

(72) Inventor: **Ueno, Kazuo
11-125 Jiodani,Hinaga
Chita-shi,Aichi-ken 478(JP)**

(74) Representative: **Huntingford, David Ian et al
W.P. THOMPSON & CO. Coopers Building
Church Street
Liverpool L1 3AB(GB)**

## Description

The present invention relates to electric motors of the type having a moving part made of a permanent magnet, i.e. the kind of electric motor which is used for driving or positioning various kinds of industrial machinery, for example in construction machinery, processing machinery, OA instruments, machine tools, precision instruments and the like.

Conventional permanent magnet electric motors, normally include a rotor which is mounted on a frame by means of an axle so as to revolve freely and which is made of a permanent magnet that is magnetized in a diametral direction. The motor also has a stator which defines, in a coaxial manner in relation to the rotor, the outer circumference of the rotor, and which is configured with field poles standing out on its surface and separated by equal spaces in the direction of the circumference of the yoke, each of the field poles carrying a coil wound thereon. The yoke and the field pole may each be made of soft magnetic material. Alternatively the yoke and the field poles may be combined into a monolithical component, also made of soft magnetic material.

This kind of electric motor is given a one-step turn in a predetermined direction by attracting the magnetic pole of the rotor to the magnetic field of a field pole excited by the excitation of the associated coil. The latter excited coil is then made free from excitation, and the next coil in the direction of rotation is caused to be excited in turn so as to attract the magnetic pole of the rotor to the magnetic field of the next pole, giving another one-step turn. In this way, the establishment of a shifting magnetic field around the field poles by exciting each of the coils in regular turn enables the rotor to revolve continuously.

Furthermore, when the rotor of such a conventional electric motor is required to stop in a certain predetermined position, a holding current is arranged to flow in a selected coil in order to keep the rotor in the required position by the holding torque produced when the magnetic pole of the rotor is attracted to the magnetic field of the magnetic pole.

The structure of the conventional electric motor, however, requires an exciting current which excites the field pole almost up to the range of saturation in order to produce the shifting magnetic field.

Also the structure of the conventional electric motor needs to be such as to keep the holding current flowing, when the rotor is required to stop in the predetermined position. Therefore, when the conventional electric motor is to send power or to move an object to a predetermined position correctly, it needs an operating structure such as a ring gear and a link mechanism.

An object of the present invention is to provide an efficient electric motor, which turns the rotor by producing the shifting magnetic field and can hold the rotor by a large holding torque, even though without the holding current, and also which has enough torque even at a lower speed besides the easiness of control of the moving speed of the rotor.

An electric motor according to the present invention comprising

a) a yoke comprising a soft magnetic material;

b) a plurality of field poles, each field pole having a field core and a pole piece comprising soft magnetic material, said field poles being arranged on the yoke ;

c) at least one coil wound around each of said cores ; and

d) a rotor including a permanent magnet, said pole pieces being positioned around said rotor with a gap therebetween is characterised in that said field core comprises a semi-hard magnetic material

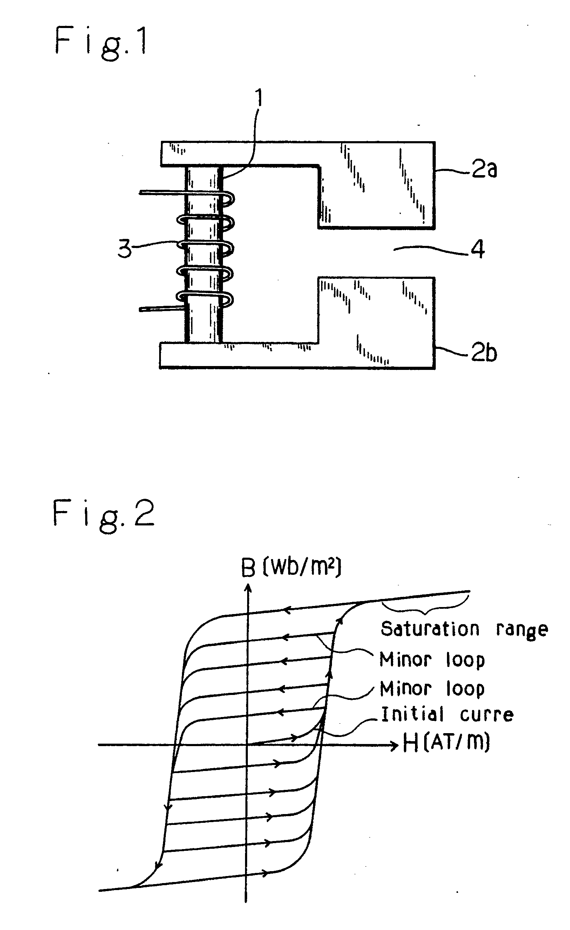

An electric motor in accordance with this invention produces a moving magnetic field around the pole pieces by controlling the residual magnetic flux density accompanying the magnetization of the field cores made of semi-hard magnetic material. The principle of control of the residual magnetic flux density will be explained with reference to Figs. 1 to 3 of the accompanying drawings.

Fig.1 shows a magnetic circuit which comprises a field core 1 made of semi-hard magnetic material, pole pieces 2a, 2b connected to the two ends of the field core 1, and a gap 4 formed between the pole pieces 2a, 2b. The semi-hard magnetic material of the field core 1 forms a B - H curve as shown in Fig.2. When the magnetic field intensity is varied in the positive (+) direction or negative (-) direction but not so much as to reach the saturation range, minor loops are drawn as shown in Fig.2.

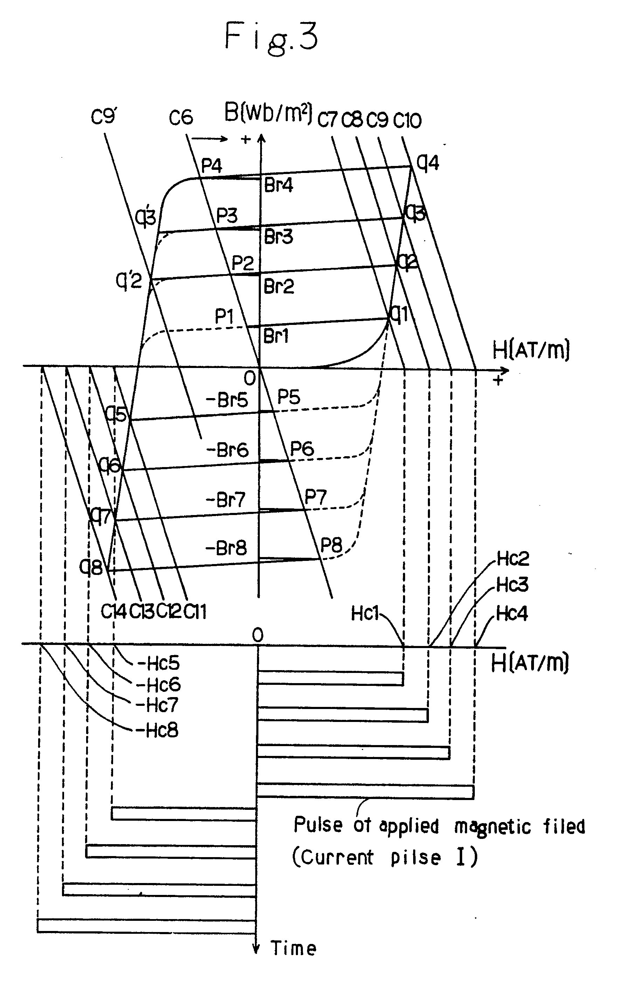

Fig.3 shows the relation between the magnetic flux density B induced in the field core 1 and the magnetic field H applied to the field core 1 by the current I flowing in the coil 3. In Fig.3, C6 indicates an operating straight line in the magnetic circuit in Fig.1, showing the property decided mainly by the magnetic resistance in the gap 4, the length of the field core 1, and the cross-sectional area of the field core 1. Let the operating point be on the origin, if the current I = o. If the current I flows in the coil 3 and a magnetic field of positive direction is applied and then the current I is increased gradually, the operating line is shifted to the right gradually. The magnetic flux density induced in the field core 1 can be represented by the intersection of the B - H curve and the operating line. If the magnetic field H is induced until $Hc_1$, the operating point starts at the origin O and attains to the point $q_1$. Next, if the current I is made $\pm = O$, the operating point stops at the point $P_1$ and the residual magnetic flux density $Br_1$ is induced in the field core 1. If the current I is increased further and the magnetic field is induced until $Hc_2$ and then the current I is returned to O, the operating point moves from the point $P_1$ to the point $q_2$ and then from the point $q_2$ to the point $P_2$ with the result that the residual magnetic flux $Br_2$ is produced in the field core 1. The operating line then varies from C6 to C7 and from C7 to C6.

Thereafter, every time the magnetic field is impressed in sequence in $Hc_3$, $Hc_4$ in a similar manner to before, the residual magnetic flux is increased more and more as shown as $Br_3$, $Br_4$. In such a condition as this, if a similar procedure is done in $-Hc_6$, $-Hc_7$, $-Hc_8$, the residual magnetic flux density $Br_6$, $Br_7$, $Br_8$ corresponding to the magnetic field is induced in the field core 1, respectively.

As above described, the residual magnetic flux density induced in the field core 1 can be controlled by the current I flowing in a pulsed state in the coil 3 wound around the field core 1 made of semi-hard magnetic material.

By making use of the action of the minor loop of the semi-hard magnetic material, the residual magnetic flux density of plural field cores is controlled in sequence and the shifting magnetic field is induced, whereby the poles of the rotor are attracted in sequence with the result that the rotor is moved. The stop position of the rotor is held by the attractive torque between the residual magnetic flux of the field core and the magnetic pole of the rotor which comes to a stop.

As above described, since the electric motor of the invention comprises a yoke of soft magnetic material, plural field poles each having a field core of semi-hard magnetic material and pole piece of soft magnetic material, the shifting magnetic field can be generated by making use of the action of the minor loop of the field core of semi-hard magnetic material. In consequence, the motor efficiency becomes high because exciting current is not needed while the shifting torque of the rotor is produced. Moreover, since the rotor is held at the stop position by the residual magnetic flux of the field core when it comes to a halt, a holding current for holding the rotor in this position is not required.

The electric pulses impressed on the coil can be varied in size, width, frequency or the like, whereby the shifting speed of the rotor can be easily controlled and the rotor can be stopped at any position.

Since the electric motor can be driven at a lower speed, the low-speed operating energy can be gained directly from the electric energy without any energy loss due to a reduction mechanism or the like.

The invention is described further hereinafter, by way of example only, with reference to the accompanying drawings, in which:-

Fig.1 shows a magnetic circuit including semi-hard magnetic material, illustrating the principle of the present invention;

Fig.2 is a B - H curve of the semi-hard magnetic material;

Fig.3 is a B - H curve illustrating the relation between the excitation of the semi-hard magnetic material and the residual magnetic flux density;

Fig.4 is a front view of one embodiment of the present invention;

Fig.5 is a side view of another embodiment;

Fig.6 is a B - H curve of magnetic material applicable to the invention; and

Fig.7 is a B - H curve of hard magnetic material such as barium ferrite.

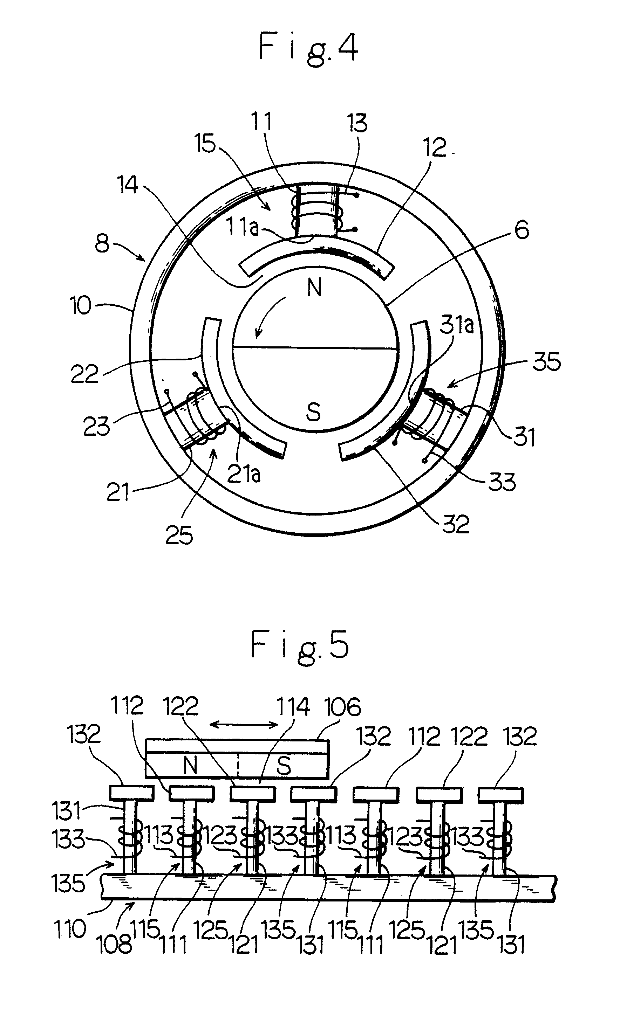

Fig.4 is a front sectional view of a pulsed motor which is one type of electric motor to which the invention can be applied. In Fig.4, numeral 6 designates the motor rotor, and numeral 8 designates its stator.

## (A) First Embodiment

The rotor 6 is a permanent magnet with two poles, N, S, confronting each other in a diametral direction. The stator 8 comprises a yoke 10 of soft magnetic material, and three field poles 15, 25, 35 projecting at intervals of 120 degrees in this Example.

The field poles 15, 25, 35 comprise field cores 11, 21, 31 of semi-hard magnetic material, and pole pieces 12, 22, 32 of soft magnetic material mounted on the projecting ends 11a, 21a, 31a of the field cores 11, 21, 31, respectively.

A gap 14 of a required distance is formed between the pole pieces 12, 22, 32, and the rotor 6. Coils 13, 23, 33 are wound around the field cores 11, 21, 31 respectively.

The pulse motor shown in Fig.4 is of conventional configuration, except that the field cores 11, 21, 31 are made of the semi-hard magnetic material.

Operation of the pulse motor having such a structure will now be described.

In the condition shown in Fig.4, the rotor 6 is stationary and current does not flow in any of the coils 13, 23, 33. Therefore, the magnetic flux induced by the rotor 6 enters from the N pole of the rotor 6 into the pole piece 12 of the field pole 15, and further passes through the field core 11 and the yoke 10. The magnetic flux is divided from the yoke 10 into the field cores 21, 31 and flows from the field core 21 to the pole piece 22 and from the field core 31 to the pole piece 32. The magnetic flux passes mostly from the pole pieces 22, 32 through the S pole of the rotor 6, whereby in this state the torque on the rotor 6 is in a balanced state.

Let it be assumed that the state where the N pole induced at the projecting end 11a of the field core 11 or the projecting end 21a of the field core 21 or the projecting end 31a of the field core 31 denotes a state where the flux of the field cores 11, 21, 31 is induced as positive (+). Then, in the situation shown in Fig.4, as the pole piece 12 is made an S pole, a negative flux is induced at the field core 11. Explaining this by reference to Fig.3, the situation is shown by any of the operating lines C11, C12, C13, C14. Likewise, as the pole piece 22 of the field pole 25 is made an N pole, the situation of the field core 21 is shown by any of the operating lines C7, C8, C9, C10. The field core 31 is in the same situation as that of the field core 21.

In other words, a bias magnetic field is applied to each of the field cores 11, 21, 31 by the permanent magnet of the rotor 6. In Fig.3, assume that the field core 11 be at the situation of the intersection $q_8$ between the operating line C14 and the minor loop. Likewise, assume that the field cores 21 and 31 be at the situation of the intersection $q_3$ between the operating line C9 and the minor loop. The reason for this assumption is that the field core 11 is just opposite to the N pole of the rotor 6 and biased most strongly and that the field cores 21, 31 are influenced a little by the N pole of the rotor 6 and therefore the bias of the S pole of the rotor 6 is not strong in comparison to the field core 11.

Next, with the field cores 11, 31 kept as they are, pulse current flows in the coil 23 of the field core 21 whereby the flux induced in the field core 21 is decreased. In this case, the pulse current flows in the coil 23 of the field core 21 so that the operating line C9 is shifted to the position of C9'. That is, the operating point is moved from $q_3$ to $q'_3$ and further to $q'_2$. Accompanying this, the flux density produced in the field core 21 is also decreased from $q'_3$ to $q'_2$, and the flux density of the N pole induced in the pole piece 22 is decreased. As a result the rotor 6 is moved in the direction of the arrow because the rotor 6 is made to be totally out of balance. When the current in the coil 23 passes through the peak value and becomes zero, the bias of the field core 21 by the rotor 6 is weakened by the movement (rotation) and the operating point becomes the intersection $q_2$ between the operating line C8 and the minor loop. As the balance is recovered the rotation of the rotor 6 ceases.

In this state, since the rotation of the rotor 6 is only very small, the bias of the field core 11 scarcely varies. However, since the pole piece 32 faces the S pole of the rotor 6 further, the bias of the field core 31 becomes slightly bigger. As a result, the operating point is moved from $q_3$ towards $q_4$.

When pulse current flows in the coil 23 so as to decrease the magnetic flux density of the field core 21, the rotor 6 is further rotated according to the same principle as described above. When the pulse is further impressed in a similar manner, a reverse magnetic flux is eventually induced in the field core 21. As a result, the N pole of the rotor 6 is attracted towards the pole piece 22. When the operating point of the field core 21 is moved from $q_7$ to $q_8$, the N pole of the rotor 6 overlaps with the pole piece 22 and the pole piece 12, whereby the pole piece 32 of the field core 31 comes to confront the S pole fully. The magnetic flux density of the field core 11 is weakened and eventually its polarity is reversed. Next, when the magnetic flux density of the field core 31 is weakened, the rotor 6 is rotated in the direction of the arrow. The magnetic flux density of the field core 31 is further weakened until a reverse magnetic flux density is produced. When the above-mentioned operations are performed in a series of operations, the rotor 6 is rotated in the arrowed direction.

When the semi-hard magnetic material is used for the field core, the magnetic flux density of the stator can be controlled according to how an electric pulse is impressed, and therefore the operation of the rotor can be also controlled arbitrarily with the result that the forward and reverse rotation of the rotor and the rotational speed thereof can be controlled according to how an electric pulse is impressed. The electric pulse can be varied in relation to the interval and size of the voltage source pulse and those of the current source pulse, and also in relation to the polarity of (+), (-) of the power source. Furthermore, the operation can be varied in relation to the pulse waveform and the pulse frequency.

(B) Second Embodiment

Fig.5 is a side view of an embodiment in which this invention is applied to a moving body performing a stroke. The stroke-performing body is a linear development of a stator and a rotor, and each component of the stroke-performing body is similar to that of the first embodiment except for the linear construction. Consequently, the reference numerals in the first embodiment can be all replaced by three-figure numerals in the second embodiment, and a detailed description can be omitted.

In the second embodiment, a linear stator 108 comprises a yoke 110 of soft magnetic material, and a plurality of field poles 115, 125, 135 arranged with prescribed intervals on the upper surface of the yoke 110. The field poles 115, 125, 135 comprise field cores 111, 121, 131 of semi-hard magnetic material, and pole pieces 112, 122, 132 of soft magnetic material, respectively.

Coils 113, 123, 133 are wound around the field cores 111, 121, 131, respectively, and a moving part 106 is magnetized in such a way that the N and S poles confront each other in the shifting direction. The moving part 106 keeps a prescribed distance from the pole pieces 112, 122, 132 so as to constitute a gap 114, and is supported movable in the longitudinal direction of the stator 108 (by means not shown).

Positive voltage is applied to the coils 113, 123, 133 in sequence, whereby the residual magnetic flux density of the field cores 111, 121, 131 is controlled and the moving magnetic field is induced on the upper side of the pole pieces 112, 122, 132 so that the moving part 106 is moved linearly.

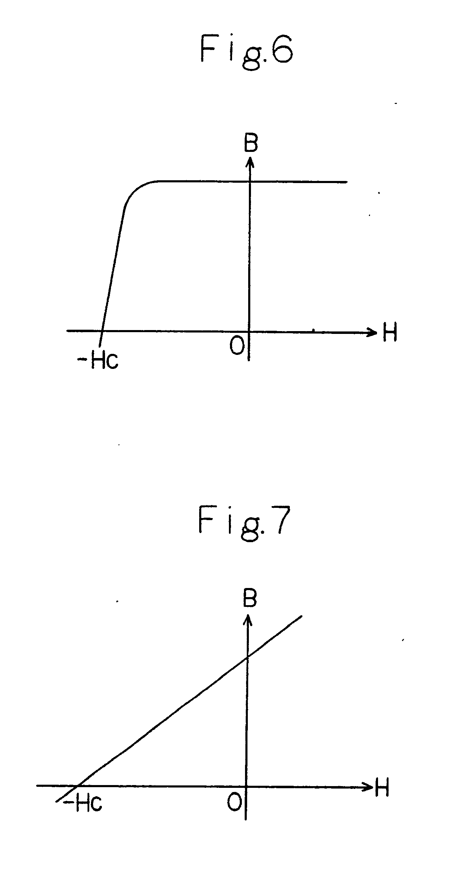

The above-mentioned semi-hard material takes an Hc value of several tens to several thousands e on the B - H curve shown in Fig.6, and the material of an Hc value of several hundreds or more can be applied if the shape is similar to that shown in Fig.6. Material of an Hc value of several hundreds or more is termed "hard magnetic material" in general, but material of an Hc value of about several hundreds can be applied as a field core in this invention.

Barium ferrite and a magnet using rare earth elements having a B - H curve as shown in Fig. 7 cannot be utilized as the field core of the invention, because the utilization of the minor loop is difficult.

## Claims

1. An electric motor comprising
    a) a yoke (8) comprising a soft magnetic material;
    b) a plurality of field poles (15, 25, 35), each field pole having a field core (11, 21, 31) and a pole piece (12, 22, 32) comprising soft magnetic material, said field poles (15, 25, 35) being arranged on the yoke (8);
    c) at least one coil (13, 23, 33) wound around each of said cores (11, 21, 31); and
    d) a rotor (6) including a permanent magnet, said pole pieces being positioned around said rotor with a gap (14) therebetween, characterised in that said field core comprises a semi-hard magnetic material

2. An electric motor as claimed in claim 1, wherein each pole piece (12, 22, 32) comprises a partial circular shaped magnetic field-inducing member, and wherein one end of each of said field cores (11, 21, 31) is connected to a corresponding pole piece and the other end of each of said field cores is connected to said yoke (8).

3. An electric motor as claimed in claim 2, wherein the gap (14) between said rotor and each of said circular shaped magnetism inducing members is constant.

4. An electric motor as claimed in claim 3, wherein said field coils are excited in a predetermined sequence to thereby control the residual magnetic flux density of said field cores, and wherein the shifting of the magnetic field causes the rotation of said rotor.

5. An electric motor as claimed in claim 1, wherein each pole piece comprises a linear shaped magnetic field-inducing member, and wherein one end of each of said field cores is connected to a corresponding pole piece and the other end of each of said field cores is connected to said yoke.

6. An electric motor as claimed in claim 5, wherein the gap between said rotor and each of said linear shaped magnetic field-inducing members is constant.

7. An electric motor as claimed in claim 6, wherein said field coils are excited in a predetermined sequence to thereby control the residual magnetic flux density of said field cores, and wherein the shifting of the magnetic field causes the linear movement of said rotor.

## Revendications

1. Moteur électrique comprenant
    a) une culasse (8) constitué d'un matériau magnétique doux;
    b) une pluralité de pôles inducteurs (15, 25, 35) comportant chacun un noyau inducteur (11, 21, 31) et une pièce polaire (12, 22, 32) constituée de matériau magnétique doux, les pôles inducteurs (15, 25, 35) étant disposés sur la culasse (8);
    c) du moins une bobine (13, 23, 33) enroulée autour de chacun des noyaux (11, 21, 31); et
    d) un rotor (6) contenant un aimant permanent, les pièces polaires étant disposées autour de ce rotor avec un entrefer (14) entre elles et le rotor,
    caractérisé en ce que les noyaux inducteurs sont constitués d'un matériau magnétique semi-dur.

2. Moteur électrique selon la revendication 1, dans lequel chaque pièce polaire (12, 22, 32) est constituée d'une pièce inductrice de champ magnétique de forme partiellement circulaire, et dans lequel une extrémité des noyaux inducteurs (11, 21, 31) est reliée a une pièce polaire correspondante et l'autre extrémité de chaque noyau polaire est relié à la culasse (8).

3. Moteur électrique selon la revendication 2, dans lequel l'entrefer (14) entre le rotor et chacune des pièces inductrices de magnétisme de forme circulaire est constant.

4. Moteur électrique selon la revendication 3, dans lequel les bobines de champ sont excitées dans un ordre prédéterminé en vue du contrôle de la densité de flux magnétique résiduel des noyaux inducteurs, et dans lequel le déplacement du champ magnétique provoque la rotation du rotor.

5. Moteur électrique selon la revendication 1, dans lequel chaque pièce polaire comprend une pièce inductrice de champ magnétique de forme linéaire, et dans lequel une extrémité de chacun des noyaux inducteurs est reliée à une pièce polaire correspondante et l'autre extrémité de chacun des noyaux inducteurs est reliée à la culasse.

6. Moteur électrique selon la revendication 5, dans lequel l'entrefer entre le rotor et chacune des pièces inductrices de champ magnétique de forme linéaire est constant.

7. Moteur électrique selon la revendication 6, dans lequel les bobines de champ sont excitées suivant un ordre prédéterminé en vue du contrôle de la densité de flux magnétique résiduel des noyaux inducteurs, et dans lequel le déplacement du champ magnétique provoque le mouvement linéaire d'une pièce mobile utilisée à la place du rotor.

**Patentansprüche**

1. Elektromotor enthaltend:
   a) ein magnetisch weiches Material aufweisendes Joch (8);
   b) eine Vielzahl von Feldpolen (15, 25, 35), wobei jeder Feldpol einen Feldkern (11, 21, 31) und ein magnetisch weiches Material enthaltendes Polstück (12, 22, 32) aufweist und die Feldpole (15, 25, 35) an dem Joch (8) angeordnet sind;
   c) mindestens eine um jeden der Kerne (11, 21, 31) gewickelte Spule (13, 23, 33); und
   d) einen einen Permanentmagnet enthaltenden Rotor (6), wobei die Polstücke um den Rotor mit einer Lücke (14) dazwischen positioniert sind, dadurch gekennzeichnet, daß der Feldkern ein magnetisch halb-hartes Material aufweist.

2. Elektromotor nach Anspruch 1, bei dem jedes Polstück (12, 22, 32) ein teilkreisförmiges Magnetfeld-Induzier-Element aufweist, und bei dem ein Ende jedes der Feldkerne (11, 21, 31) mit einem entsprechenden Polstück verbunden und das andere Ende jedes der Feldkerne mit dem Joch (8) verbunden ist.

3. Elektromotor nach Anspruch 2, bei dem die Lücke (14) zwischen dem Rotor und jedem der kreisförmigen magnetinduzierenden Elemente konstant ist.

4. Elektromotor nach Anspruch 3, bei dem die Feldspulen in einer vorbestimmten Reihenfolge erregt werden, um dadurch die Restmagnetflußdichte der Feldkerne zu steuern, und bei dem die Verschiebung des Magnetfeldes die Rotation des Motors verursacht.

5. Elektromotor nach Anspruch 1, bei dem jedes Polstück ein linearförmiges magnetfeldinduzierendes Element enthält und bei dem ein Ende jedes der Feldkerne mit einem entsprechenden Polstück und das andere Ende jedes der Feldkerne mit dem Joch verbunden ist.

6. Elektromotor nach Anspruch 5, bei dem die Lücke zwischen dem Rotor und jedem der linearförmigen magnetfeldinduzierenden Elemente konstant ist.

7. Elektromotor nach Anspruch 6, bei dem die Feldspulen in einer vorbestimmten Folge erregt werden, um dadurch die Restmagnetflußdichte der Feldkerne zu steuern, und bei dem die Verschiebung des Magnetfeldes die Linearbewegung des Rotors verursacht.

EP 0 238 317 B1

# Fig.1

# Fig.2

B (Wb/m²)

Saturation range
Minor loop
Minor loop
Initial curre

H (AT/m)

# Fig.3

# Fig.4

# Fig.5

## Fig.6

## Fig.7